# EUROPÄISCHE PATENTSCHRIFT

(11) **EP 1 327 794 B1**
(45) Veröffentlichungstag und Bekanntmachung des Hinweises auf die Patenterteilung: **14.12.2005**
(21) Anmeldenummer: 02019327.2
(22) Anmeldetag: 29.08.2002
(51) Int. Cl.: F16F 13/10

(54) **Hydraulisch dämpfendes Lager**
Hydraulically damped support
Support à amortissement hydraulique

(30) Priorität: 10.01.2002 DE 10200592
(43) Veröffentlichungstag der Anmeldung: 16.07.2003
(73) Patentinhaber: Carl Freudenberg KG, 69469 Weinheim (DE)
(72) Erfinder: Winkler, Gerold, 69488 Birkenau (DE); Gärtner, Hanno, 69517 Gorxheimertal (DE)

(56) Entgegenhaltungen:
- EP-A- 0 331 951
- EP-A- 0 939 243
- DE-A1- 3 809 166
- DE-A1- 4 435 431
- DE-A1- 19 620 971
- DE-A1- 19 958 011
- PATENT ABSTRACTS OF JAPAN Bd. 014, Nr. 172 (M-0958), 4. April 1990 (1990-04-04) & JP 02 026336 A (HONDA MOTOR CO LTD), 29. Januar 1990 (1990-01-29)
- PATENT ABSTRACTS OF JAPAN Bd. 1995, Nr. 02, 31. März 1995 (1995-03-31) -& JP 06 307489 A (KURASHIKI KAKO CO LTD), 1. November 1994 (1994-11-01)
- PATENT ABSTRACTS OF JAPAN Bd. 012, Nr. 081 (M-676), 15. März 1988 (1988-03-15) -& JP 62 220730 A (KINUGAWA RUBBER IND CO LTD), 28. September 1987 (1987-09-28)

## Beschreibung

Die Erfindung betrifft ein hydraulisch dämpfendes Lager mit einem Arbeitsraum und einem Ausgleichsraum, die mit Dämpfungsflüssigkeit gefüllt sind, wobei zwischen dem Arbeitsraum und dem Ausgleichsraum eine Trennwand mit zumindest einem Dämpfungskanal angeordnet ist, der den Arbeitsraum und den Ausgleichsraum strömungsleitend verbindet, wobei die Trennwand als Düsenkäfig ausgebildet ist und zumindest zwei Düsenscheiben umfasst, die einander axial in Richtung der eingeleiteten Schwingungen benachbart zugeordnet sind und wobei axial zwischen den Düsenscheiben eine schwingfähige Membran zur Isolierung höherfrequenter Schwingungen angeordnet ist.

### Stand der Technik

Ein solches Lager ist aus der DE 38 09 166 C2 bekannt. Das Lager ist als hydraulisch dämpfendes Zweikammer-Motorlager ausgebildet, wobei die Trennwand horizontal in zwei symmetrische Hälften eingeteilt ist. Im radial äußeren Bereich der Trennwand ist der Dämpfungskanal angeordnet. Die Trennwand weist eine zentrale Öffnung auf, in der eine gummi-elastische Membran eingespannt ist, wobei die Membran einen zylindrisch verdickten Randbereich und über einen Steg geringer Dicke ein damit verbundenes stetig verdicktes Membranmittelteil aufweist. Die Tilgung von Leerlaufschwingungen durch das vorbekannte Lager ist wenig zufriedenstellend.

### Darstellung der Erfindung

Der Erfindung liegt die Aufgabe zugrunde, ein Lager der eingangs genannten Art derart weiterzuentwickeln, dass zusätzlich zur Isolierung höherfrequenter Schwingungen und zur Dämpfung tieferfrequenter Schwingungen, jeweils in einem Drehzahlbereich oberhalb der Leerlaufdrehzahl, eine Schwingungstilgung leerlaufbedingter Schwingungen ermöglicht wird.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist ein hydraulisch dämpfendes Lager mit einem Arbeitsraum und einem Ausgleichsraum vorgesehen, die mit Dämpfungsflüssigkeit gefüllt sind, wobei zwischen dem Arbeitsraum und dem Ausgleichsraum eine Trennwand mit zumindest einem Dämpfungskanal angeordnet ist, der den Arbeitsraum und den Ausgleichsraum strömungsleitend verbindet, wobei die Trennwand als Düsenkäfig ausgebildet ist und zumindest zwei Düsenscheiben umfasst, die einander axial in Richtung der eingeleiteten Schwingungen benachbart zugeordnet sind, wobei axial zwischen den Düsenscheiben eine schwingfähige Membran zur Isolierung höherfrequenter Schwingungen angeordnet ist, wobei die Trennwand zur Tilgung von Leerlaufschwingungen zusätzlich einen Tilgerkanal aufweist und wobei der Tilgerkanal durch die Membran in zwei relativ zueinander zumindest im Wesentlichen flüssigkeitsdichte, axial zueinander benachbarte Teilkanäle getrennt ist, von denen einer in den Arbeitsraum, der andere in den Ausgleichsraum mündet.

Hierbei ist von Vorteil, dass das erfindungsgemäße Lager zusätzlich zur Isolierung höherfrequenter und zur Dämpfung tieferfrequenter Schwingungen eine Tilgung von Leerlaufschwingungen ermöglicht, wobei die Membran im Bereich des Tilgerkanals phasenverschoben, bevorzugt gegenphasig zu den eingeleiteten Leerlaufschwingungen schwingt. Die phasenverschobene Schwingung der Membran im Bereich des Tilgerkanals erfolgt ausschließlich im Bereich der Leerlaufdrehzahl, demgegenüber jedoch nicht in einem Drehzahlbereich oberhalb der Leerlaufdrehzahl. Besonders vorteilhaft sind die Gebrauchseigenschaften des erfindungsgemäßen Lagers, wenn die Teilkanäle durch die Membran vollkommen flüssigkeitsdicht voneinander getrennt sind.

Während des Betriebs einer auf dem erfindungsgemäßen Lager abgestützten Verbrennungskraftmaschine oberhalb der Leerlaufdrehzahl funktioniert das Lager wie allgemein bekannte hydraulisch dämpfende Lager, bei denen zur Isolierung höherfrequenter, kleinamplitudiger Schwingungen die Membran innerhalb der Trennwand zwischen den Düsenscheiben hin- und herbeweglich ist. Zur Dämpfung tieffrequenter, großamplitudiger Schwingungen, die beispielsweise beim Überfahren von Bordsteinkanten entstehen, schwingt die innerhalb des Dämpfungskanals befindliche Flüssigkeitssäule gegenphasig / phasenverschoben hin- und her; die tieffrequenten, großamplitudigen Schwingungen werden dadurch gedämpft.

Das erfindungsgemäße Lager weist in Relation zu seinen vielfältigen Funktionen einen außerordentlich einfachen und teilearmen Aufbau auf und ist dadurch kostengünstig herstellbar.

Nach einer vorteilhaften Ausgestaltung kann es vorgesehen sein, dass die Membran einstückig ausgebildet ist. Speziell die Montage der beiden die Trennwand bildenden Düsenscheiben unter Zwischenfügung der Membran ist durch eine derartige Ausgestaltung wesentlich vereinfacht, da die vormontierbare Einheit, die aus den Düsenscheiben und der montierten Membran besteht, nur durch drei Einzelteile gebildet ist. Durch eine einstückig ausgebildete Membran ist, im Vergleich zu mehrteilig ausgebildeten Membranen außerdem von Vorteil, dass es einer separaten Abdichtung der Bestandteile der Membran nicht bedarf.

Die Membran besteht bevorzugt aus einem elastomeren Werkstoff, zur guten Tilgung von Leerlaufschwingungen und zur Isolierung höherfrequenter, kleinamplitudiger Schwingungen, wie sie beispielsweise oberhalb der Leerlaufdrehzahl auftreten.
Zur Tilgung der Leerlaufschwingungen kann die Membran im Zentralbereich eine Dicke von 0,5 bis 2,0 mm aufweisen. Derart gestaltete Membranen weisen für die meisten Anwendungsfälle gute Gebrauchseigenschaften auf, da sie einerseits ausreichend widerstandsfähig gegen mechanische Belastungen sind und andererseits trotzdem eine gute Flexibilität aufweisen.
Membranen mit einer Dicke von weniger als 0,5 mm weisen für einige Anwendungsfälle eine nicht zufriedenstellende Gebrauchsdauer auf, da durch die vergleichsweise geringe Dicke, speziell im Bereich der größten Biegebelastungen, Risse auftreten können, die die Gebrauchseigenschaften des Lagers nachteilig verändern, da ein undefinierter Übertritt von Dämpfungsflüssigkeit aus dem Arbeitsraum in den Ausgleichsraum und wieder zurück erfolgt. Ist die Dicke der Membran demgegenüber größer als 2,0 mm, ist die Membran für die meisten Anwendungsfälle nicht ausreichend flexibel, so dass Leerlaufschwingungen nur unzureichend getilgt werden.

Die Membran kann im Bereich des außenumfangsseitigen Rands des Tilgerkanals in axialer Richtung beiderseits Anschlägen der Trennwand mit axialem Abstand benachbart zugeordnet sein. Hierbei ist von Vorteil, dass die Membran innerhalb des Tilgerkanals eine größtmögliche Flexibilität in axialer, das heißt in Richtung der eingeleiteten Schwingungen aufweist und dadurch die unerwünschten Leerlaufschwingungen besonders effizient getilgt werden.

Besonders vorteilhaft ist ein Abstand, der axial beiderseits der Membran zu den jeweils axial benachbart angrenzenden Anschlägen 0,2 bis 2,5 mm beträgt, wobei das Verhältnis der Dicke der Membran zum jeweiligen Abstand bevorzugt 1 beträgt. Bei einer derartigen Bemessung des Abstands zu den Anschlägen ist von Vorteil, dass diese von der Membran während der Tilgung der Leerlaufschwingungen nicht berührt werden, um eine möglichst optimale Tilgung der Leerlaufschwingungen zu erreichen. Lediglich bei Einleitung großamplitudiger, tieffrequenter Schwingungen in das Lager, wenn also Dämpfungsflüssigkeit durch den Dämpfungskanal vom Arbeitsraum in den Ausgleichsraum und wieder zurück verlagert wird, legt sich die Membran an die Anschläge an, die sich im Raum mit dem vergleichsweise geringeren Druck befinden; durch die Anschläge wird die Membran vor unerwünscht hohen mechanischen Belastungen und daraus resultierend vor einer Beschädigung / Zerstörung geschützt.

Zur Veränderung der Kennlinie der dynamischen Federrate über der Frequenz besteht die Möglichkeit, Modifizierungen an der Membran vorzusehen. Die Membran kann dabei innerhalb des Tilgerkanals eine als zusätzliche Tilgermasse ausgebildete Materialanhäufung aufweisen, wobei die gesamte Membran materialeinheitlich ausgebildet ist. Hierbei ist von Vorteil, dass eine solche Membran einfach und kostengünstig herstellbar ist. Außerdem kann eine solche Membran sortenrein recycelt werden.

Nach einer anderen Ausgestaltung besteht die Möglichkeit, dass die Membran innerhalb des Tilgerkanals eine separat erzeugte, zusätzliche Tilgermasse aufweist, die vom Werkstoff der Membran vollständig oder zumindest teilweise umschlossen ist. Eine solche zusätzliche Tilgermasse kann beispielsweise durch eine Metallscheibe gebildet sein. Eine vollständig vom Werkstoff der Membran umschlossene Scheibe, ist vor äußeren Einflüssen gut geschützt. Separat durchzuführender Korrosionsschutzmaßnahmen bedarf es daher nicht.

Der Tilgerkanal ist bevorzugt zentral in der Trennwand angeordnet. Die Gebrauchseigenschaften eines derart gestalteten Lagers sowie dessen einfache Herstellbarkeit sind von Vorteil.

Die Membran kann innerhalb des Tilgerkanals einen Zentralbereich aufweisen, der durch eine im Wesentlichen rollbalgförmige Anbindung mit dem kreisringförmigen Randbereich der Membran verbunden ist, wobei der Randbereich zur Isolierung höherfrequenter Schwingungen axial zwischen den Düsenscheiben hin- und herbeweglich ist. Durch die rollbalgförmige Anbindung des Zentralbereichs am Randbereich ist eine ausgezeichnete Flexibilität und Hin- und Herbeweglichkeit des Zentralbereichs bezogen auf den Randbereich sichergestellt, was im Hinblick auf eine effiziente Tilgung von Leerlaufschwingungen von hervorzuhebendem Vorteil ist. Außerdem werden durch die rollbalgförmige Anbindung gebrauchsdauerverringernde Zug- und / oder Schubspannungen in diesem Bereich verhindert. Das Lager weist daher gleichbleibend gute Gebrauchseigenschaften während einer langen Gebrauchsdauer auf.

Die einstückig ausgebildete Membran hat demnach zwei Funktionen. Zur Tilgung von Leerlaufschwingungen ist der Zentralbereich phasenverschoben zu den eingeleiteten Leerlaufschwingungen in axialer Richtung hin- und herbeweglich. Demgegenüber ist der kreisringförmige Randbereich zur Isolierung höherfrequenter, kleinamplitudiger Schwingungen, die oberhalb der Leerlaufdrehzahl auftreten, zwischen den Düsenscheiben in axialer Richtung hin- und herbeweglich. Dadurch, dass die Membran beide Funktionen in sich vereint, ist das Lager insgesamt einfach und kostengünstig herstellbar.

Der Randbereich kann auf zumindest einer seiner den Düsenscheiben zugewandten Oberflächen eine Oberflächenprofilierung aufweisen. Hierbei ist von Vorteil, dass unerwünschte Anschlaggeräusche der Membran an den Düsenscheiben vermieden werden.

Zumindest eine der Düsenscheiben kann aus einem polymerem Werkstoff bestehen und unter Zwischenfügung der Membran einschnappbar an der jeweils anderen Düsenscheibe festlegbar sein. Bevorzugt können beide Düsenscheiben aus einem polymeren Werkstoff bestehen. Solche Düsenscheiben können beispielsweise durch Spritzgießen hergestellt sein. Durch ein derartiges Verfahren sind auch vergleichsweise komplizierte Formen einfach und kostengünstig herstellbar. Außerdem hat die vormontierbare Einheit, bestehend aus den beiden Düsenscheiben und der Membran eine nur geringe Masse, wodurch das Lager auch für Leichtbau-Anwendungen geeignet ist.

Durch seine kostengünstige Herstellbarkeit kann das in seinen Funktionen vielseitige Lager beispielsweise auch in Fahrzeugen der unteren Preisklassen zur Anwendung gelangen.

### Kurzbeschreibung der Zeichnung

Das erfindungsgemäße Lager wird nachfolgend anhand der Zeichnungen weiter verdeutlicht.

Diese zeigen:
- Fig. 1: ein Ausführungsbeispiel einer Trennwand eines erfindungsgemäßen Lagers in perspektivischer und geschnittener Darstellung,
- Fig. 2: ein erstes Ausführungsbeispiel einer Membran aus Fig. 1,
- Fig. 3: ein zweites Ausführungsbeispiel einer Membran aus Fig. 1,
- Fig. 4: ein drittes Ausführungsbeispiel einer Membran aus Fig. 1 und
- Fig. 5: ein Hydrolager in perspektivischer und geschnittener Darstellung, umfassend die Trennwand aus Fig. 1.

### Ausführung der Erfindung

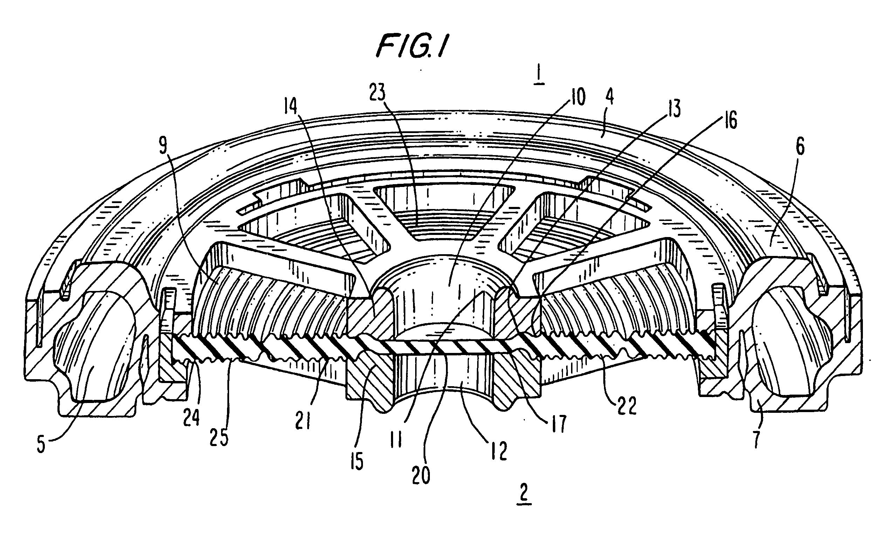

In Fig. 1 ist eine Trennwand 4 eines Hydrolagers in perspektivischer und geschnittener Darstellung gezeigt. Die Trennwand 4 umfasst eine obere 6 und eine untere Düsenscheibe 7, die in diesem Ausführungsbeispiel jeweils aus polymerem Werkstoff bestehen, und unter Zwischenfügung der Membran 9 einschnappbar, das heißt formschlüssig aneinander festlegbar sind.

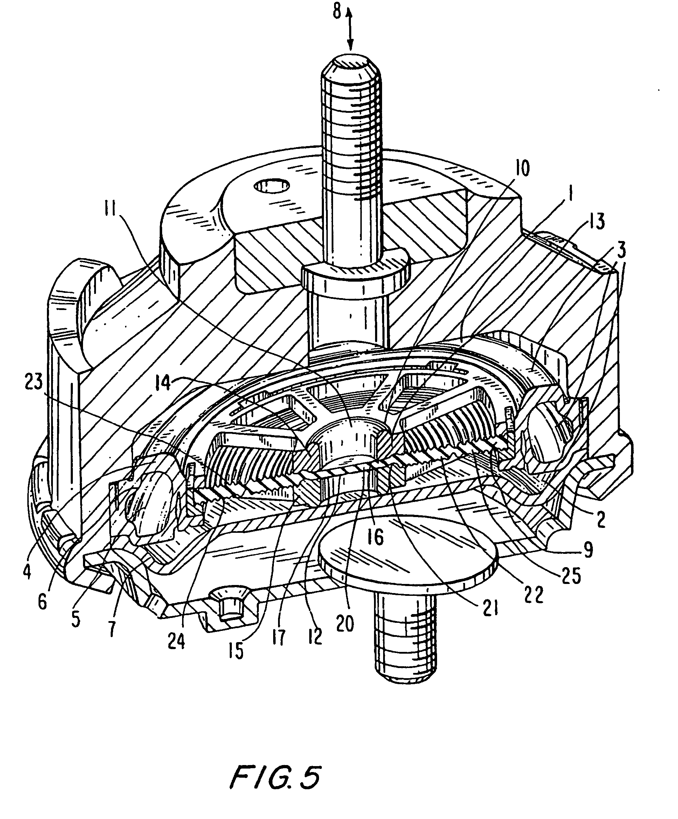

Die Membran 9 ist in jedem der Ausführungsbeispiele einstückig ausgebildet, besteht aus einem elastomeren Werkstoff und weist im Zentralbereich eine Dicke von 1,3 mm auf. Die Trennwand 4 umfasst, von radial außen nach radial innen betrachtet drei Funktionsbereiche. Radial außen in der Trennwand 4 ist der Dämpfungskanal 5 angeordnet, der den Arbeitsraum 1 und den Ausgleichsraum 2 aus Fig. 5 strömungsleitend verbindet. Die radial äußere Anordnung des Dämpfungskanals 5 ist sinnvoll, um innerhalb des Dämpfungskanals 5 zu einer möglichst großen Flüssigkeitssäule mit möglichst großer Masse zu gelangen, um tieffrequente, großamplitudige Schwingungen gut dämpfen zu können.

Radial innerhalb des Dämpfungskanals 5 ist der kreisringförmige Randbereich 22 der Membran 9 angeordnet, der den Zentralbereich 20 der Membran 9 außenumfangsseitig umschließt und einstückig ineinander übergehend und materialeinheitlich mit diesem ausgebildet ist. Der Zentralbereich 20 und der Randbereich 22 sind in den hier gezeigten Ausführungsbeispielen durch eine im Wesentlichen rollbalgförmige Anbindung 21 miteinander verbunden, wobei der Randbereich 22 auf seinen den Düsenscheiben 6, 7 zugewandten Oberflächen 23, 24 jeweils eine Oberflächenprofilierung 25 in Form konzentrischer Rippen aufweist.

Die Membran 9 ist im Bereich des außenumfangsseitigen Rands 13 des Tilgerkanals 10 in axialer Richtung beiderseits Anschlägen14, 15 der Trennwand 4 mit axialem Abstand 16, 17 benachbart zugeordnet, wobei das Verhältnis der Dicke der Membran 9 zum axialen Abstand 16, 17 etwa 1 beträgt.

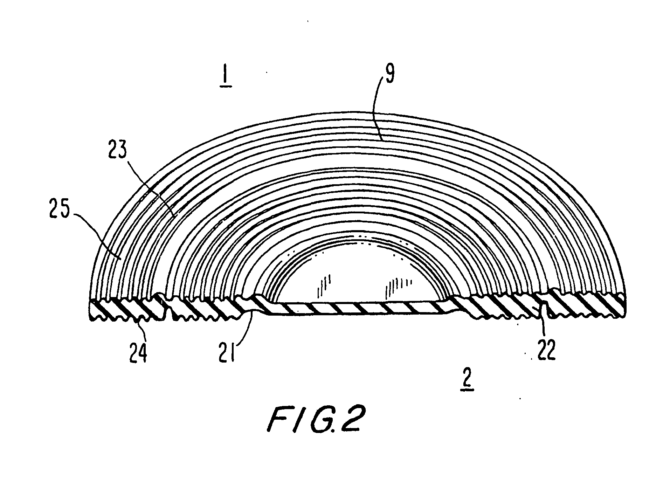

In Fig. 2 ist die Membran 9 aus Fig. 1 in perspektivischer und geschnittener Darstellung gezeigt.

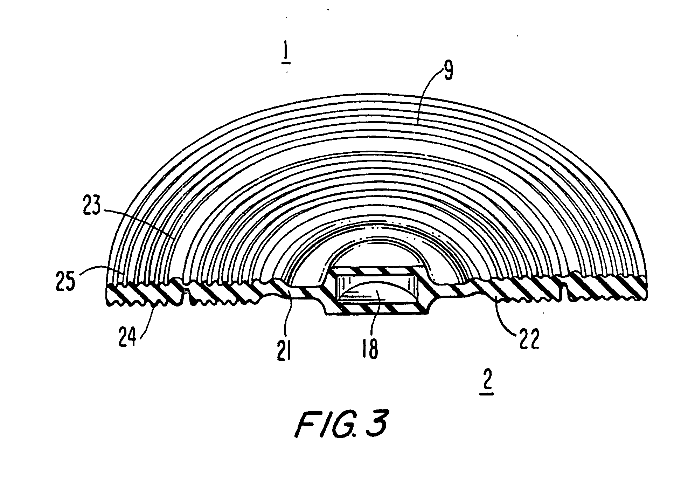

In Fig. 3 ist eine alternative Ausführungsform der Membran 9 gezeigt, die sich von der Membran aus Fig. 2 dadurch unterscheidet, dass die Membran 9 in ihrem Zentralbereich 20 innerhalb des Tilgerkanals 10 eine als zusätzliche Tilgermasse 18 ausgebildete Materialanhäufung aufweist, wodurch eine Anpassung der Kennlinie der dynamischen Federrate über der Frequenz ermöglicht wird.

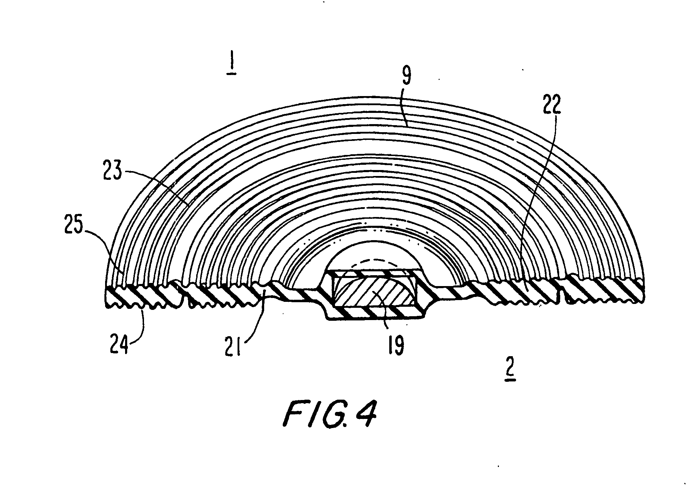

In Fig. 4 ist ein weiteres Ausführungsbeispiel einer Membran 9 gezeigt, die ähnlich ausgebildet ist, wie die Membran 9 aus Fig. 3. Abweichend davon weist die Membran 9 aus Fig. 4 im Zentralbereich 20 innerhalb des Tilgerkanals 10 eine separat erzeugte, zusätzliche Tilgermasse 19 auf, die aus einem metallischen Werkstoff besteht und scheibenförmig ausgebildet ist. Die zusätzliche Tilgermasse 19 ist vom elastomeren Werkstoff der Membran 9 vollständig umschlossen.

In Fig. 5 ist ein hydraulisch dämpfendes Lager gezeigt, in dem eine Trennwand 4 gemäß Fig. 1 zur Anwendung gelangt. Das Lager umfasst einen Arbeitsraum 1 und einen Ausgleichsraum 2, die jeweils mit Dämpfungsflüssigkeit 3 gefüllt sind. Die Trennwand 4 ist zwischen dem Arbeitsraum 1 und dem Ausgleichsraum 2 angeordnet, wobei der Arbeitsraum 1 und der Ausgleichsraum 2 durch den Dämpfungskanal 5 strömungsleitend verbunden sind. Axial zwischen den Düsenscheiben 6, 7 ist die in Richtung der eingeleiteten Schwingungen schwingfähige Membran 9 angeordnet, wobei die Trennwand 4 zur Tilgung von Leerlaufschwingungen zusätzlich einen Tilgerkanal 10 aufweist. Der Tilgerkanal 10 wird durch die Membran 9 in zwei relativ zueinander flüssigkeitsdichte, axial zueinander benachbarte Teilkanäle getrennt, von denen einer 11 in den Arbeitsraum 1, der andere 12 in den Ausgleichsraum 2 mündet. Durch eine entsprechende Dimensionierung des Tilgerkanals 10 wird eine Eigenschwingung des Fluids mit der Membran 9 im Zentralbereich 20 beziehungsweise der Tilgermasse 19 eingestellt, so dass eine Tilgerwirkung entsteht. Dieser Tilger eilt den erzwungenen Bewegungen des Lagers voraus und reduziert dadurch die dynamische Steifigkeit des Lagers. Diese dynamische Steifigkeit ist, für kleinere Anregungsamplituden, weit unter der statischen Grundsteifigkeit des Lagers. Der Tilgereffekt kann in einem Frequenzbereich von 10 bis 90 Herz eingestellt werden. Bei Anregungsfrequenzen, die über der eingestellten Eigenfrequenz liegen, beginnt die Fluidsäule gegenphasig im Tilgerkanal zu schwingen; die dynamische Federrate steigt an.

## Patentansprüche

1. Hydraulisch dämpfendes Lager mit einem Arbeitsraum (1) und einem Ausgleichsraum (2), die mit Dämpfungsflüssigkeit (3) gefüllt sind, wobei zwischen dem Arbeitsraum (1) und dem Ausgleichsraum (2) eine Trennwand (4) mit zumindest einem Dämpfungskanal (5) angeordnet ist, der den Arbeitsraum (1) und den Ausgleichsraum (2) strömungsleitend verbindet, wobei die Trennwand (4) als Düsenkäfig ausgebildet ist und zumindest zwei Düsenscheiben (6, 7) umfasst, die einander axial in Richtung (8) der eingeleiteten Schwingungen benachbart zugeordnet sind, wobei axial zwischen den Düsenscheiben (6, 7) eine schwingfähige Membran (9) zur Isolierung höherfrequenter Schwingungen angeordnet ist, wobei die Trennwand (4) zur Tilgung von Leerlaufschwingungen zusätzlich einen Tilgerkanal (10) aufweist und wobei der Tilgerkanal (10) durch die Membran (9) in zwei relativ zueinander zumindest im Wesentlichen flüssigkeitsdichte, axial zueinander benachbarte Teilkanäle (11, 12) getrennt ist, von denen einer in den Arbeitsraum (1), der andere in den Ausgleichsraum (2) mündet.

2. Lager nach Anspruch 1, **dadurch gekennzeichnet, dass** die Membran (9) einstückig ausgebildet ist.

3. Lager nach einem der Ansprüche 1 oder 2, **dadurch gekennzeichnet, dass** die Membran (9) aus einem elastomeren Werkstoff besteht.

4. Lager nach einem der Ansprüche 1 bis 3, **dadurch gekennzeichnet, dass** die Membran (9) im Zentralbereich (20) eine Dicke von 0,5 bis 2,0 mm aufweist.

5. Lager nach einem der Ansprüche 1 bis 4, **dadurch gekennzeichnet, dass** die Membran (9) im Bereich des außenumfangsseitigen Rands (13) des Tilgerkanals (10) in axialer Richtung beiderseits Anschlägen (14, 15) der Trennwand (4) mit axialem Abstand (16, 17) benachbart zugeordnet ist.

6. Lager nach Anspruch 5, **dadurch gekennzeichnet, dass** der Abstand (16, 17) axial beiderseits der Membran (9) zu den jeweils axial benachbart angrenzenden Anschlägen (14, 15) 0,2 bis 2,5 mm beträgt.

7. Lager nach einem der Ansprüche 1 bis 6, **dadurch gekennzeichnet, dass** die Membran (9) innerhalb des Tilgerkanals (10) eine als zusätzliche Tilgermasse (18) ausgebildete Materialanhäufung aufweist.

8. Lager nach einem der Ansprüche 1 bis 6, **dadurch gekennzeichnet, dass** die Membran (9) innerhalb des Tilgerkanals (10) eine separat erzeugte, zusätzliche Tilgermasse (19) aufweist, die vom Werkstoff der Membran (9) vollständig oder zumindest teilweise umschlossen ist.

9. Lager nach einem der Ansprüche 1 bis 8, **dadurch gekennzeichnet, dass** der Tilgerkanal (10) zentral in der Trennwand (4) angeordnet ist.

10. Lager nach einem der Ansprüche 1 bis 9, **dadurch gekennzeichnet, dass** die Membran (9) innerhalb des Tilgerkanals (10) einen Zentralbereich (20) aufweist, der durch eine im Wesentlichen rollbalgförmige Anbindung (21) mit dem kreisringförmigen Randbereich (22) der Membran (9) verbunden ist, wobei der Randbereich (22) zur Isolierung höherfrequenter Schwingungen axial zwischen den Düsenscheiben (6, 7) hin- und herbeweglich ist.

11. Lager nach Anspruch 10, **dadurch gekennzeichnet, dass** der Randbereich (22) auf zumindest einer seiner den Düsenscheiben (6, 7) zugewandten Oberflächen (23, 24) eine Oberflächenprofilierung (25) aufweist.

12. Lager nach einem der Ansprüche 1 bis 11, **dadurch gekennzeichnet, dass** zumindest eine der Düsenscheiben (6, 7) aus polymerem Werkstoff besteht und unter Zwischenfügung der Membran (9) einschnappbar an der jeweils anderen Düsenscheiben (7, 6) festlegbar ist.

## Claims

1. Hydraulically damping support having a working space (1) and a compensating space (2) which are filled with damping fluid (3), a dividing wall (4) having at least one damping passage (5) being arranged between the working space (1) and the compensating space (2), this damping passage (5) connecting the working space (1) and the compensating space (2) in a fluidically conductive manner, the dividing wall (4) being designed as a nozzle cage and comprising at least two nozzle discs (6, 7) which are assigned axially to one another in an adjacent position in the direction (8) of the initiated vibrations, a vibratory diaphragm (9) for insulating higher-frequency vibrations being arranged axially between the nozzle discs (6, 7), the dividing wall (4) additionally having an absorbing passage (10) for absorbing idling vibrations, and the absorbing passage (10) being separated by the diaphragm (9) into two sectional passages (11, 12) which are at least essentially fluid-tight relative to one another and are axially adjacent to one another and of which one opens into the working space (1) and the other opens into the compensating space (2).

2. Support according to Claim 1, **characterized in that** the diaphragm (9) is designed in one piece.

3. Support according to either of Claims 1 and 2, **characterized in that** the diaphragm (9) is made of an elastomeric material.

4. Support according to one of Claims 1 to 3, **characterized in that** the diaphragm (9) has a thickness of 0.5 to 2.0 mm in the central region (20).

5. Support according to one of Claims 1 to 4, **characterized in that** the diaphragm (9), in the region of the outer circumferential margin (13) of the absorbing passage (10), is axially assigned on both sides to stops (14, 15) of the dividing wall (4) in an adjacent position at an axial distance (16, 17) apart.

6. Support according to Claim 5, **characterized in that** the distance (16, 17) axially on both sides of the diaphragm (9) from the respectively axially adjacent stops (14, 15) is 0.2 to 2.5 mm.

7. Support according to one of Claims 1 to 6, **characterized in that** the diaphragm (9), within the absorbing passage (10), has a material accumulation designed as an additional absorbing mass (18).

8. Support according to one of Claims 1 to 6, **characterized in that** the diaphragm (9), within the absorbing passage (10), has a separately produced, additional absorbing mass (19) which is completely or at least partly enclosed by the material of the diaphragm (9).

9. Support according to one of Claims 1 to 8, **characterized in that** the absorbing passage (10) is arranged centrally in the dividing wall (4).

10. Support according to one of Claims 1 to 9, **characterized in that** the diaphragm (9), within the absorbing passage (10), has a central region (20) which is connected to the annular marginal region (22) of the diaphragm (9) by an essentially rolling-bellows-shaped connection (21), the marginal region (22) being movable back and forth axially between the nozzle discs (6, 7) for insulating higher-frequency vibrations.

11. Support according to Claim 10, **characterized in that** the marginal region (22) has surface profiling (25) on at least one of its surfaces (23, 24) facing the nozzle discs (6, 7).

12. Support according to one of Claims 1 to 11, **characterized in that** at least one of the nozzle discs (6, 7) is made of a polymer material and can be snapped into a fixed position on the respective other nozzle discs (7, 6) with the diaphragm (9) fitted in between.

## Revendications

1. Palier à amortissement hydraulique avec une chambre de travail (1) et une chambre de compensation (2) qui sont remplies de liquide hydraulique (3), sachant qu'une cloison séparatrice (4) est disposée entre la chambre de travail (1) et la chambre de compensation (2) et est pourvue d'au moins un canal d'amortissement (5) qui relie fluidiquement la chambre de travail (1) et la chambre de compensation (2), sachant que la cloison séparatrice (4) est réalisée sous forme de cage à buse et comprend au moins deux disques de buse (6, 7) qui sont mutuellement associés en voisinage axial dans la direction (8) des vibrations introduites, sachant qu'une membrane vibrante (9) est disposée axialement entre les disques de buse (6, 7) pour isoler les vibrations à haute fréquence, sachant que la cloison séparatrice (4) présente en outre un canal absorbeur (10) pour absorber les vibrations au ralenti, et sachant que le canal absorbeur (10) est divisé par la membrane (9) en deux canaux partiels (11, 12) axialement voisins et au moins essentiellement étanches aux fluides l'un par rapport à l'autre, parmi lesquels l'un débouche dans la chambre de travail (1) et l'autre dans la chambre de compensation (2).

2. Palier selon la revendication 1, **caractérisé en ce que** la membrane (9) est réalisée d'un seul tenant.

3. Palier selon la revendication 1 ou 2, **caractérisé en ce que** la membrane (9) est constituée d'un matériau élastomère.

4. Palier selon l'une quelconque des revendications 1 à 3, **caractérisé en ce que** la membrane (9) présente dans la région centrale (20) une épaisseur de 0,5 à 2,0 mm.

5. Palier selon l'une quelconque des revendications 1 à 4, **caractérisé en ce que** la membrane (9), dans la région du bord circonférentiel extérieur (13) du canal absorbeur (10), est associée, axialement de part et d'autre, à des butées (14, 15) de la cloison séparatrice (4) qui sont voisines de la membrane à distance axiale (16, 17).

6. Palier selon la revendication 5, **caractérisé en ce que** la distance (16, 17), axialement de part et d'autre, entre la membrane (9) et les butées limitrophes respectives (14, 15) axialement voisines est de 0,2 à 2,5 mm.

7. Palier selon l'une quelconque des revendications 1 à 6, **caractérisé en ce que** la membrane (9) présente, à l'intérieur du canal absorbeur (10), une accumulation de matériau conçue comme masse absorbante supplémentaire (18).

8. Palier selon l'une quelconque des revendications 1 à 6, **caractérisé en ce que** la membrane (9) présente, à l'intérieur du canal absorbeur (10), une masse absorbante supplémentaire (19) séparément produite, qui est entourée totalement ou au moins partiellement par le matériau de la membrane (9).

9. Palier selon l'une quelconque des revendications 1 à 8, **caractérisé en ce que** le canal absorbeur (10) est disposé centralement dans la cloison séparatrice (4).

10. Palier selon l'une quelconque des revendications 1 à 9, **caractérisé en ce que** la membrane (9) présente, à l'intérieur du canal absorbeur (10), une région centrale (20) qui est reliée, par un rattachement (21) essentiellement en forme de soufflet roulant, à la région de bord (22) en forme de couronne de la membrane (9), sachant que la région de bord (22) est mobile axialement en va-et-vient entre les disques de buse (6, 7) afin d'isoler les vibrations à haute fréquence.

11. Palier selon la revendication 10, **caractérisé en ce que** la région de bord (22) présente un profilage de surface (25) sur au moins une de ses surfaces (23, 24) tournées vers les disques de buse (6, 7).

12. Palier selon l'une quelconque des revendications 1 à 11, **caractérisé en ce qu'**au moins un des disques de buse (6, 7) est composé de matériau polymère et peut être fixé par enclenchement sur l'autre disque de buse respectif (7, 6), avec intercalation de la membrane (9).
